# EUROPEAN PATENT APPLICATION

(11) **EP 1 110 662 A1**
(43) Date of publication of application: **27.06.2001**
(21) Application number: 99870266.6
(22) Date of filing: 17.12.1999
(51) Int. Cl.: B23K 26/00, B23K 15/00

(54) **Process and installation for reducing and eliminating joint gap opening during high energy beam welding of abutted metal parts**

(71) Applicant: SIDMAR N.V., B-9042 Gent (BE)
(72) Inventor: The designation of the inventor has not yet been filed
(74) Representative: Van Malderen, Joelle

(57) **Abstract**

Process for butt joining and welding of at least two metal parts (10) by means of a high energy beam, preferably laser or electron beam; in which the edges to be welded of said parts are brought together, aligned in a specific geometric arrangement with a suitable precision and maintained together in relative position; characterised in that the thermal gap opening (7) occurring between not yet welded edges ahead of the current welding area (2) is thermally compensated in such a way that said gap (7) is kept within acceptable limits, using at least one external heating source (8), which position and intensity can be varied upon time in the vicinity of the parts surface.

## Description

### Field of the invention

The invention relates to an improved metal welding process, using a high energy beam, such as an electron or laser beam. It concerns more particularly butt seam welding of metal blanks for carbody applications.

Furthermore, the invention relates to two installations intended for performing the process.

### Technological background and state of the art

High energy beam welding of two or more metal parts or blanks, requires keeping as small as possible the gap between the abutted edges to be joined. Typically gap values above a particular fraction of the blank thickness to be joined are already considered to be critical.

In the following, the metal parts or blanks to be welded can be tri- or two-dimensional.

In order to keep the gap within the required specifications, a very precise fitting of the blanks to be butt welded is necessary. This is achieved using a precision cutting process of the edges to be welded. Deviations from the edge linearity should be less than half of the value of the admissible maximum gap. A high cut-to-break ratio is also desirable to obtain a good edge fitting in the blank normal direction.

With an edge quality defined in such a way, a sufficiently low gap can be achieved through suitable positioning of the metal blanks prior to welding.

After positioning, the metal blanks to be welded are generally clamped in order to maintain the desired small gap during the entire welding process.

However, even after the aforementioned precautions have been taken, a number of drawbacks may occur.

First, during welding of the abutted edges, the high energy input of the focused welding beam, immediately followed by the heat loss during subsequent cooling, is inducing a temperature gradient in the metal blanks. This results in a stress gradient that tends, on the one hand, to make the weld contract, i.e. reduce in width downstream of the welding beam (i.e. in the already welded section) and, on the other hand, to widen the gap between the abutted blank edges upstream of the actual welding position (i.e. in the not yet welded section). This phenomenon is called the thermal opening of the gap.

The temperature induced stress gradient becomes critical if the resulting lateral net force acting as to increase the gap between the not yet welded blank edges becomes larger than the counterbalancing force provided by clamping and pressing tools that are intended to hold the blanks in their initial position. Thus, the temperature induced stress gradient can locally generate an intolerable gap that is detrimental for the butt welding process.

Practically, this leads to the impossibility to achieve a good weld quality, without taking appropriate countermeasures.

Typical countermeasures consist in :
- the application of a strong mechanical clamping force, mostly hydraulically actuated, sometimes magnetically enhanced. This method has the disadvantage to require complicated, expensive and usually part specific clamping tools, which often impede the actual welding operation, and result in practically inhibiting a continuous mode welding operation;
- the cooling of the weld, immediately after welding, by a gas or water jet, as known from document WO-A-96 11 770. This leads to the drawback that the blank surface is exposed to substances, which can deteriorate the specific properties of the welded product or can interfere with the welding process in a negative manner. For instance, this could lead to corrosion of the blank surface. Furthermore, the handling of the cooling fluid, e.g. storage, circulation, waste control, can be hazardous, complicated or expensive. An inert gas curtain has to be used to prevent the interference of the cooling fluid with the shielding gas in the welding area. Finally, the very high cooling rate leads to increased hardness or cold cracking in the weld seam.

Related to the invention are moreover a number of granted or still pending patents about continuous butt welding with high energy beam means.

Document US-A-5 001 324 discloses the principles of a joint tracking welding system suitable for an automated production line. Transverse data profiles of an elongated joint to be welded are acquired and processed to calculate the position of the joint centreline. Signals are further generated to position and adjust continuously the beam welding focal point as seam welding is progressing.

In document DE-C-3 830 892, or its counterpart US-A-4 924 063, a laser welding process is disclosed using a laser measuring beam to guide the laser welding beam along a weld groove defined by two abutting pieces. The measuring laser is deflected with a frequency of at least 100 Hz for a feed rate of 100 mm/s, which corresponds to a groove course covered by a lmm grid. The intensity of the measuring laser is modulated with a frequency of at least 200 kHz to avoid the interference on the sensor with Planck radiation coming from the welding plasma and from the molten bath. The measuring laser cotravels with the laser-welding beam along the weld groove. Follow-up signals are generated in response to the measuring signals, which allows correcting the position of the laser-welding beam.

US-A-5 328 083 presents an installation for continuous butt welding of two metal blanks comprising at least
- a zone A for positioning a first blank longitudinally with respect to the transport direction comprising means to position and align the side to be welded on the axis of the laser beam, as well as means to clamp said first blank;
- a zone B for making a butt joint between two metal blanks to be welded, comprising means such as above-mentioned (zone A) and a device for feeding and align a second blank edge to edge to the first blank, as well as means for clamping the second blank;
- a zone C for guiding, transferring and welding the two blanks by means of a stationary welding beam tool;
- a zone D for discharging the two welded blanks.

This disclosure can be considered as providing a standard layout for building a continuous butt welding installation. The means for applying strong clamping or pressing forces as discussed above are generally insufficient to counter the thermal gap opening.

Document US-A-5 364 006 describes a device for positioning metal blanks in an installation for continuous butt welding of at least two blanks by means of a laser beam. The device comprises a conveyor belt formed by an alternating arrangement of rails having balls and bands provided with projecting studs evenly spaced apart and friction means adapted to be applied on the upper surface of the blanks and to impart to the blanks a movement of translation substantially perpendicular to the feed direction. The purpose of the device is to position the edges of the blanks to be welded along the axis of the laser beam, prior to coming over to the welding unit.

In document WO-A-96 30 160, one combines a facility capable of continuous feeding, transporting, abutting and aligning blanks with a welding unit equipped with seam tracking means in order obtain precise joining and welding of the abutted blanks. Thus accurate aligning is not needed, while eventually two seam position sensors are used. Again for the purpose of attaining directional precision both blanks are cooled during the welding process.

### Aims of the invention

The invention aims at providing a new process and the related installation for beam welding of abutted metal parts, which do not present the usual drawbacks of prior art.

In particular, the invention is intended to reduce, minimise or even completely eliminate an existing or a thermally induced gap between the butt joint edges to be welded.

### Summary of the invention

A first object of the present invention is a process for butt joining and welding of at least two metal parts by means of a high energy beam, preferably laser or electron beam; in which the edges to be welded of said parts are brought together, aligned in a specific geometric arrangement with a suitable precision and maintained together in relative position; characterised in that the thermal gap opening occurring between not yet welded edges ahead of the current welding area is thermally compensated in such a way that said gap is kept within acceptable limits, using at least one external heating source, which position and intensity can be varied upon time in the vicinity of the parts surface.

In a first preferred embodiment the external heating source progresses with the seam run along the theoretical welding line, downstream of the welding point. The seam run can be linear or non-linear.

In a second preferred embodiment the external heating sources progress with the seam run along two parallels located on each side of the theoretical welding line, upstream and/or downstream of the welding point. Again, the seam run can be linear or non-linear.

Advantageously said at least one heating source is an infrared or inductive heater.

According to the invention, the metal parts can be tri- or two-dimensional (blanks).

An second object of the invention is an installation for continuous butt joining and welding of at least two metal parts by means of a high energy beam, preferably a laser or electron beam, in which:
- at least two parts are held against transport means and simultaneously forwarded by said means in a converging manner until the edges to be welded abut;
- the parts are aligned against a longitudinal positioning device parallel to the theoretical welding line;
- the accurate relative positioning in weld direction of the parts is achieved by a speed and duration course of acceleration and/or deceleration of one of said belts relative to the other;
- the set of parts is moved to a beam welding tool, where one seam position sensor discontinuously measures the seam run, the measurement signal being processed in a computer and further used to reposition said beam welding tool, perpendicular to the weld edge, in order to align said beam welding tool with the seam run;
- the thermal gap opening occurring between not yet welded edges ahead of the current welding area is thermally compensated in such a way that the gap opening is kept within the requirements, using at least one external heating source which position and intensity can be varied upon time on the whole parts surface.

The parts are transported through the installation using magnetic roller means, preferably magnetic belt conveyors.

The invention relates advantageously to an installation where the parts, either two- or tri-dimensional, are transported through said installation in a same plane or in different non-parallel planes.

An alternative object of the present invention is an installation for continuous butt joining and welding of at least two metal parts by means of a high energy beam, preferably a laser or electron beam, in which:
- a pallet, preloaded with stacks of unwelded blanks of different geometry, is brought by a shuttlewagon to an entry roller conveyor, where it is locked;
- an offloading robot lifts a set of blanks off the stacks, brings them to and deposits them onto a welding jig mounted on a welding shuttle;
- the welding shuttle moves underneath a portal frame, while the blanks are simultaneously brought together and clamped, mechanically or/and magnetically, onto the welding jig;
- a CNC controlled welding head moves the laser beam along the edges to be welded, to perform the weld; said welding head comprising a seamtracker to measure the actual position of the butt edge, and correct the head positioning to suit; suitably located heating sources to perform the thermal gap opening compensation; a visual weld geometry control device;
- the welding is done alternatively on both shuttles;
- after welding, the shuttle moves from underneath the portal frame, the jig releases the welded blank and a robot lifts it off the jig, brings and deposits it on a turnover conveyor;
- after turnover of the blanks, the weld quality is checked by moving a visual weld geometry control device and/or an ultrasonic type control device attached to a robot, along the weld;
- the controlled blank is oiled in a device, lifted off by a robot, optionally turned over and deposited on either an Ok pallet or on a NOk pallet;
- full pallets are discharged by roller conveyors onto a shuttlewagon.

### Short description of the drawings

Figure 1 shows a top plan view of two abutted metal blanks during the course of welding, with thermal opening of the weld gap.

Figure 2 shows a top plan view of two abutted metal blanks during the course of welding, with thermal compensation of the gap opening ahead of the welding point. In Figure 2.a, the external heating source is located upon the already welded joint. In Figure 2.b, the external heating sources are located parallel alongside the seam.

Figure 3.a and 3.b are a sectional view and a top plan view, respectively, of an installation for continuous butt welding of steel blanks according to the invention, of the so-called fixed optics type.

Figure 4 is a top plan view of an installation for continuous butt welding of steel blanks according to the invention, of the so-called flying optics type.

### Detailed description of the invention

The physical principle at the origin of the invention is the thermal expansion effect affecting the discussed materials, i.e. the metal blanks subjected to butt-welding. This effect causes an object made of said materials to change its length, or more generally its geometrical dimensions and shape, under the influence of a temperature change or in presence of a temperature gradient.

If the temperature of an object is increased homogeneously by ΔT, the dimension of its unconstrained periphery will increase proportionally to △T. The proportionality factor is known as the coefficient of thermal expansion. The invention uses the dimensional expansion of a constraint-free periphery due to a temperature increase to address the above-mentioned problems.

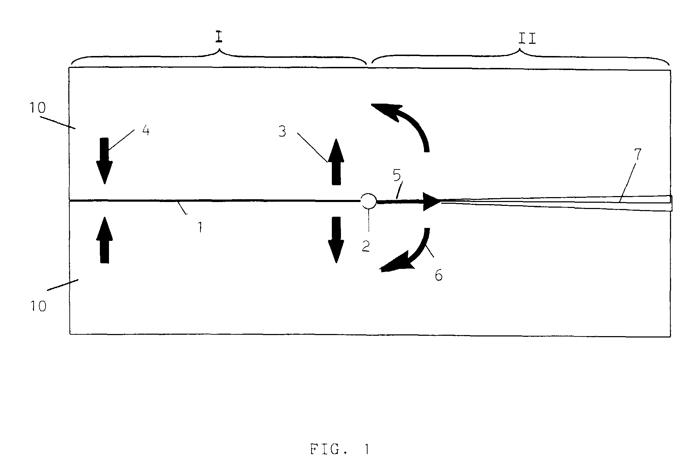

When welding the butt gap 1 with a high energy beam, the temperature evolution in the blank plane can be suitably modelled as that of a moving heat source 5 (Figure 1). The highest temperature is reached in the actual welding point 2. The area that has already been welded before is cooling down, while simultaneously the surface of elevated temperature is growing with time by heat conduction within the blank plane.

Thus, the temperature raises caused by welding leads to thermal expansion 3 of the concerned material. In the present context, the term material should be understood as being the weld seam and its immediate vicinity. Cooling down of the already welded zone results conversely in contraction of the expanded material 4.

The combination of maximum thermal expansion in the region closer to the weld point and thermal contraction in the region farther away from the weld point induces a stress gradient, which in turn induces a force couple 6 in the blank plane that tends to widen the unwelded section of the butt joint 1 ahead of the actual welding point. The magnitude of the force couple depends on the length to be welded, heat input and material characteristics. This so-called thermal opening of the gap 7 is schematically depicted on Figure 1. In practice this leads to the impossibility to achieve a good weld quality for extended weld lengths, without taking the countermeasures described above.

The invention overcomes this problem, by applying thermal compensation to counteract the force couple induced during the welding process. This has to be done in such a way that the metallurgical and mechanical characteristics of the welded product are not corrupted. Moreover the heating up to a desired temperature must occur at a sufficient speed.

It is known that the contraction inducing a gap opening is the result of a large temperature drop in a small section of material.

By moderately heating both blanks over a suitable area, i.e. at a temperature up to 135 °C, to keep intact the bakehardenable features of bakehardenable steel grades, but preferably between 50 and 100 °C, it is now possible to create in the semi-welded part set a compensating force couple 6 around the welding point, that effectively reduces or closes the gap in front of said welding point.

The suitable response time in the heating process is best achieved with inductive heaters positioned above or below the surface of the blanks to be welded. Infrared heaters can possibly be used as well.

The heat input of these devices is preferably adjustable in time and space so that optimum thermal compensation can be achieved during the entire welding process.

The technique is suitable for stationary as well as for continuous welding lines. In the stationary case, the parts are fixed and the welding head moves. In the continuous case, the parts move and the welding head is fixed.

### Description of preferred embodiments of the invention

The present invention will be further described in the following preferred embodiments.

It will be considered hereinafter that the welding process is running along a line, preferably a straight line, comprising one start point and one end point.

Accordingly two preferred embodiments of thermal compensation can be applied on-line, individually or in combination.

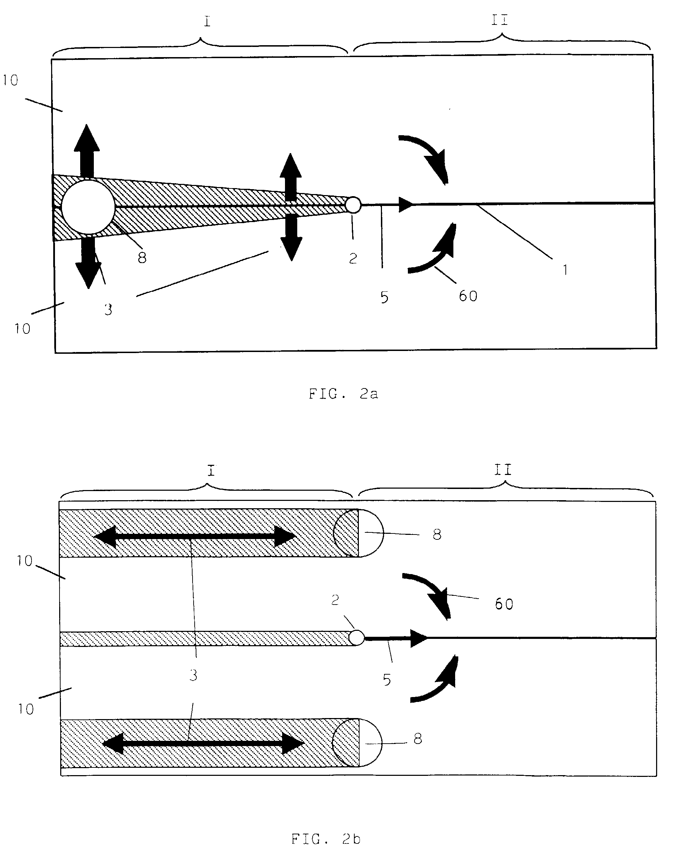

In a first embodiment (Figure 2.a), the region I farther away from the welding point, i.e. downstream in the linear welding course, is reheated using an external heating source 8. The purpose is to reduce or stop thermal contraction and further to reduce or to eliminate the gap opening ahead of the welding point, i.e. upstream (region II) in the linear welding course, by creating counterforces 60. In this case the external heating means 8 are located downstream on the welding line, as shown in Figure 2.a.

In a second embodiment, one applies external heating means 8 along local left and right parallels to the weld seam. These reheated zones are subjected to thermal expansion 3 and can virtually be seen as elongated fibres within the blank plane. Their dimensional elongation, however, is constrained by the not heated surrounding material.

The resulting stress gradient induces a couple of forces 60 that tends to close the butt gap ahead of the welding point, as shown on Figure 2.b. The magnitude of that couple depends on the peak temperature in the externally heated zones, the width of the heated zones, the distance of the heat zones from the welding line, and the length ratio of the seam to the unwelded region.

Also under the scope of the present invention are also two preferred embodiments of an installation for performing the above-mentioned process.

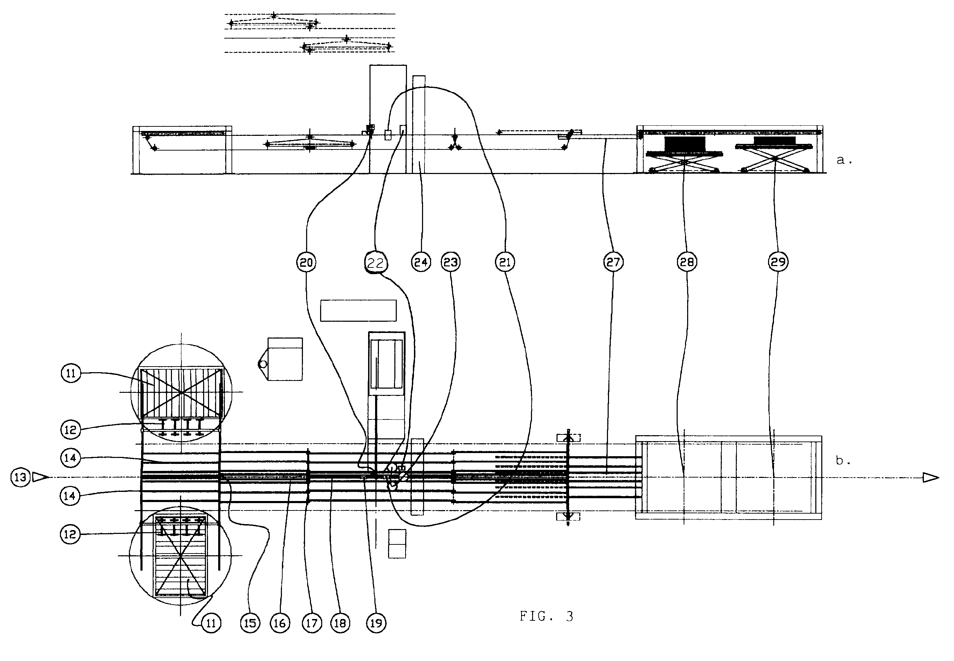

Figure 3 shows schematically an installation for continuous butt welding of steel blanks, of the fixed optics type, basically comprising the following steps.

Two pallets loaded with unwelded metal blanks are brought by a shuttlewagon onto two roller conveyors 11, to each of the two unstacking positions. On each pallet is at least one stack of metal blanks. All the blanks on the same pallet have the same dimensions. The weld edge is of the linear type. The roller conveyors can be rotated through 360° to preposition the stacks such that the weld edge of the blanks is parallel to the theoretical weld direction 13 of the line. The pallet is locked during unstacking. When a pallet is empty, it is taken back by the shuttlewagon, and replaced with a full pallet.

The unstacking devices 12 lift one set of blanks from either side, and bring the blanks together crosswise, side by side, against a lateral positioning device parallel to the theoretical welding line 13, and deposit the blanks onto the entry magnetic belt conveyors 14.

Throughout the line, the blanks are moved and accurately positioned by means of belt conveyors. Permanent magnets of suitable strength and size, are positioned under the belts such as to create a sufficient holding force, to allow accelerations of at least one g (9.8 m/s²) to take place, without causing any slippage of the blanks on the belts.

The entry belt conveyors 14 forward the blanks simultaneously in weld direction 13 towards a longitudinal positioning device 15, while at the same time the belts converge so as to bring the weld edges together. Once a pair of blanks has reached the longitudinal positioning device 15, the abutted pair is transferred to the carry-over conveyor 16, and held stationary. By repeating this lateral positioning, longitudinal positioning and transfer cycle, a number of pairs of unwelded blanks are collected onto the carry-over conveyor 16 with minimised distance between the pairs in weld direction 13. The carry-over belt 16 will accelerate this set of blanks towards the so-called "dynamic front" 17, and on arriving there, decelerate to welding speed, to synchronise with the welding belt 18. The dynamic front will then move at high speed in the direction opposite to the weld direction, over a sufficient distance, so as to bring the complete set of blanks onto the weld belt in a minimum amount of time. In this manner the discontinuous blank movement on the entry section 14, 16 is converted into a continuous blank movement on the welding belt.

As soon as the carry-over belt is empty the cycle above is repeated to bring the next set of unwelded blanks towards the dynamic front 17. Simultaneously, the dynamic front moves into weld direction, in such a manner that it is synchronised with the speed of the blanks on the welding conveyor 18.

The weld conveyor moves the blanks at a continuous speed, the weld speed, under:
- a seamtracking device 19, to continuously determine the actual position of the butt edge;
- the laser welding head 20, the lateral position (upright to the weld direction) of which is controlled to follow the butt edge position;
- two visual weld geometry control devices 21;
- one ultrasonic weld quality inspection device 22;
- the suitably located and controlled heating sources 23, to perform the thermal gap compensation;
and through an oiling machine 24.

The welded blanks can optionally be turned over by means of the turnover belt conveyor 27.

The welded blanks are stacked into two stack units according to the result of quality control (Ok 29 or NOk 28). Stacking or exit of pieces can also be carried out for Erichsen test purposes.

A pallet is brought to each one of the stacking positions 28, 29 and is locked during stacking. Pallets are brought and removed at the stacking positions by means of an exit roller conveyor.

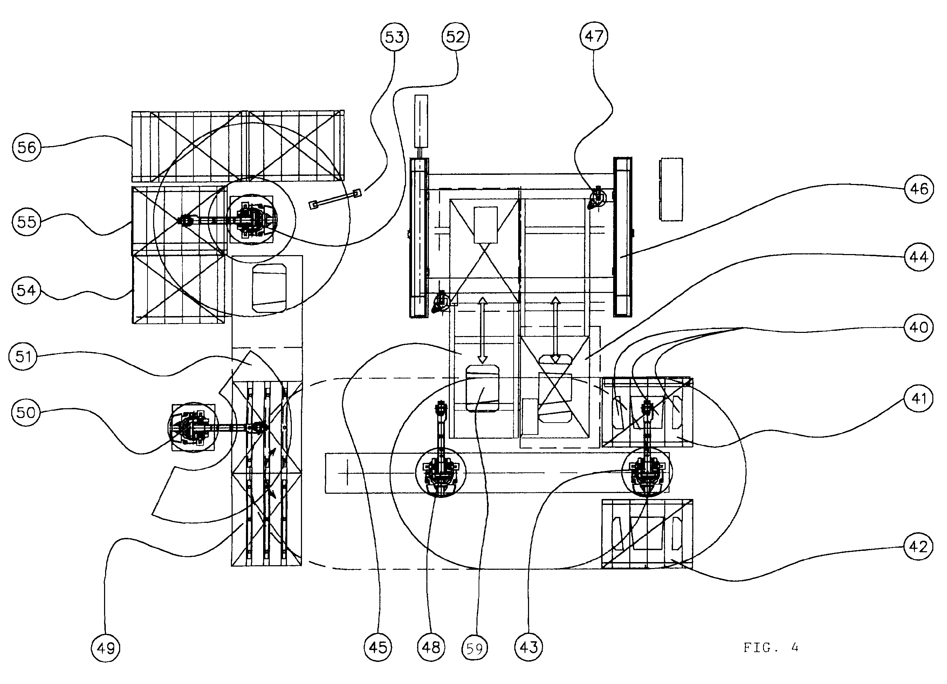

Figure 4 shows an alternative type of installation, of the so-called flying optics type, suitable for welding blanks with non-linear as well as linear welds.

A pallet, preloaded with stacks of unwelded blanks 40 of different geometry, is brought by a shuttlewagon to one of the two entry roller conveyors 41, 42, where it is locked.

An offloading robot 43 lifts a set of blanks off the stacks, brings them to and deposits them onto one of the two welding jigs mounted on either welding shuttles 44, 45.

The welding shuttle 44, 45 moves underneath the portal frame 46, while the blanks are simultaneously brought together and clamped, mechanically, magnetically or in combination, onto the welding jigs.

The CNC controlled welding head 47, moves the laser beam along the edges to be welded, to perform the weld. To the welding head structure are attached:
- a seam tracker to measure the actual position of the butt edge, and correct the head positioning accordingly;
- suitably located heating sources to perform the thermal gap opening compensation;
- a visual weld geometry control device.

The welding is done alternatively on shuttle 45 and 44. After welding the shuttle moves from underneath the portal frame 46, the jig releases the welded blank 59 and the robot 48 lifts it off the jig, brings and deposits it on the turnover conveyor 49.

After turning over the blanks, the weld quality is checked by moving a visual weld geometry control device and/or an ultrasonic type control device attached to robot 50, along the weld.

The controlled blank is oiled in device 51, lifted off by robot 52, optionally turned over at 53 and deposited on either:
- one of the two Ok pallets 54, 55;
- or on the NOk pallet 56.

Full pallets are discharged by the roller conveyors onto a shuttlewagon.

## Claims

1. Process for butt joining and welding of at least two metal parts (10) by means of a high energy beam, preferably laser or electron beam; in which the edges to be welded of said parts are brought together, aligned in a specific geometric arrangement with a suitable precision and maintained together in relative position; characterised in that the thermal gap opening (7) occurring between not yet welded edges ahead of the current welding area (2) is thermally compensated in such a way that said gap (7) is kept within acceptable limits, using at least one external heating source (8), which position and intensity can be varied upon time in the vicinity of the parts surface.

2. Process according to claim 1, characterised in that said at least one external heating source (8) progresses with the seam run along the theoretical welding line, downstream (I) of the welding point (2).

3. Process according to claim 2, characterised in that the seam run is linear.

4. Process according to claim 2, characterised in that the seam run is non-linear.

5. Process according to claim 1, characterised in that said at least one external heating source (8) progresses with the seam run along two parallels located on each side of the theoretical welding line, upstream (II) and/or downstream (I) of the welding point (2).

6. Process according to claim 5, characterised in that the seam run is linear.

7. Process according to claim 5, characterised in that the seam run is non-linear.

8. Process according to anyone of the preceding claims, characterised in that said at least one heating source (8) is an infrared or inductive heater.

9. Process according to anyone of the preceding claims, characterised in that said metal parts (10) are two-dimensional blanks.

10. Installation for continuous butt joining and welding of at least two metal parts (10) by means of a high energy beam, preferably a laser or electron beam, in which:
- both parts (10) are held against transport means (14) and simultaneously forwarded by said means in a converging manner until the edges to be welded abut;
- the parts (10) are aligned against a longitudinal positioning device (15) parallel to the theoretical welding line (13);
- the accurate relative positioning in weld direction (13) of both parts is achieved by a speed and duration course of acceleration and/or deceleration of one of said belts relative to the other;
- the set of said parts is moved to a beam welding tool (20), where one seam position sensor (19) discontinuously measures the seam run, the measurement signal being processed in a computer and further used to reposition said beam welding tool, perpendicular to the weld edge, in order to align said beam welding tool with the seam run;
- the thermal gap opening (7) occurring between not yet welded edges ahead of the current welding area (2) is thermally compensated in such a way that the gap opening is kept within the requirements, using at least one external heating source (23) which position and intensity can be varied upon time on the whole parts surface.

11. Installation according to claim 10, characterised in that the parts (10) are transported through said installation using magnetic roller means, preferably magnetic belt conveyors.

12. Installation according to claim 10 or 11, characterised in that the parts (10) are transported through said installation in a same plane.

13. Installation according to claim 10 or 11, characterised in that the parts (10) are transported through said installation in two different non-parallel planes.

14. Installation according to anyone of claims 10 to 13, characterised in that said parts (10) are two-dimensional blanks.

15. Installation for continuous butt joining and welding of at least two metal parts by means of a high energy beam, preferably a laser or electron beam, in which:
- a pallet, preloaded with stacks of unwelded blanks (40) of different geometry, is brought by a shuttlewagon to an entry roller conveyor (41,42), where said shuttlewagon is locked;
- an offloading robot (43) lifts a set of blanks off the stacks, brings them to and deposits them onto a welding jig mounted on a first welding shuttle (44) and on a second welding shuttle (45) ;
- both welding shuttles (44,45) move underneath a portal frame (46) , while the blanks are simultaneously brought together and clamped, mechanically or/and magnetically, onto the welding jig;
- a CNC controlled welding head (47) moves the laser beam along the edges to be welded, to perform the weld; said welding head comprising a seamtracker to measure the actual position of the butt edge, and correct the head positioning accordingly; suitably located heating sources to perform the thermal gap opening compensation; a visual weld geometry control device;
- the welding is done alternatively on each shuttle (44,45);
- after welding, each shuttle (44,45) moves from underneath the portal frame (46), the jig releases the welded blank (59) and a robot (48) lifts it off the jig, brings and deposits it on a turnover conveyor (49);
- after turnover of the blanks, the weld quality is checked by moving a visual weld geometry control device and/or an ultrasonic type control device attached to a robot (50), along the weld;
- the controlled blank is oiled in a device (51), lifted off by a robot (52), optionally turned over and deposited on either one Ok pallet (54,55) or on one NOk pallet (56);
- full pallets are discharged by roller conveyors onto a shuttlewagon.
